# EUROPÄISCHE PATENTSCHRIFT

(11) **EP 1 518 816 B1**
(45) Veröffentlichungstag und Bekanntmachung des Hinweises auf die Patenterteilung: **07.04.2010**
(21) Anmeldenummer: 04018536.5
(22) Anmeldetag: 05.08.2004
(51) Int. Cl.: B66B 23/24, B29C 65/02, F16G 3/10

(54) **Verfahren und Vorrichtung zur Endlosverbindung von Handläufen für Fahrtreppen und Fahrsteige**
Method and device for endless interlocking of the handrail of a moving walkway or escalator
Méthode et dispositif pour le raccordement sans fin de la main courante d'un escalateur ou tapis roulant

(30) Priorität: 25.09.2003 DE 10344468
(43) Veröffentlichungstag der Anmeldung: 30.03.2005
(73) Patentinhaber: CompriseTec GmbH, 20457 Hamburg (DE)
(72) Erfinder: Keun, Christian-André Dr., 20144 Hamburg (DE)
(74) Vertreter: Hansmann, Dierk

(56) Entgegenhaltungen:
- JP-A- 58 222 833
- US-A- 3 487 871
- US-A- 4 376 668
- US-A- 4 671 834
- US-B2- 6 497 318

## Beschreibung

Die Erfindung bezieht sich auf ein Verfahren und eine Vorrichtung zur Endlosverbindung von Handläufen für Fahrtreppen und Fahrsteigen.

Es wird von einer Anordnung gemäß der US-B2-6,497,318 ausgegangen. Hierbei sind Handläufe für Fahrtreppen und Fahrsteige mit einem Griffstück aus Polymerwerkstoff, einer Zugkräfte aufnehmenden Verstärkungsschicht aus längs verlaufenden hochsteifen Polymerfasern, einer Schicht zur Formstabilisierung aus in Querrichtung angeordneten Textillagen und einer abschließenden Gleitschicht bekannt, wobei die Schichten zu einer textilen Struktur einstückig zusammengefaßt sind und mit dem Griffstück in einem Fertigungsgang verbunden sind.

Handläufe werden endlich hergestellt, werden aber als Ring endlos verwendet. In der Endlosverbindung besteht die Schwierigkeit, daß die in den Längsverstärkungsträgern eingeleitete Spannung von dem einen Ende des Handlaufs in das gegenüberliegende Handlaufende übertragen werden müssen.

Handläufe aus Kautschuk oder thermoplastischen Elastomer werden in Längsrichtung vorwiegend durch Einzelfasern aus Stahl (Stahlcorde) oder Polymeren (Aramid, Polyamid, Polyester) verstärkt. Weitere Gewebelagen können zusätzlich das Profil des Handlaufs versteifen. Zur Endlosverbindung ist es bekannt, daß die Einzelfasern und ggf. die Gewebelagen an den Handlaufenden aufwendig partiell von der Matrix befreit werden. Die so vorbereiteten Handlaufenden werden in eine Preßform eingelegt, so daß die Einzelfaserenden seitlich aneinander liegen und die übrigen Gewebelagen sich überlappen. Nach der Zugabe einer erforderlichen Menge von Matrix werden die Einzelfasern und Gewebelagen verpreßt und die Matrix konsolidiert.

Diese Handhabung ist sehr aufwendig und somit nicht wirtschaftlich durchführbar.

Weiterhin ist aus den Anordnungen gemäß US-A-4,671,834 und US-A-4,376,668 bekannt, einen Aufnahmeraum als Lücke zu bilden, in den maßgerecht ein Verbindungselement vor einen Vulkanisierungsprozeß einsetzbar ist.

Die Aufgabe der Erfindung ist es, für eine gattungsgemäße Ausbildung ein Verfahren und eine Vorrichtung zur Durchführung des Verfahrens zu schaffen, die das bisherige Verfahren und den Vorbereitungsaufwand der zusammenführenden Enden vereinfacht.

Die Lösung dieser Aufgabe erfolgt erfindungsgemäß durch die Verfahrensschritte.entsprechend Patentanspruch 1.

Hierdurch ist eine sehr schnelle Vorbereitung der Handlaufenden möglich und die entsprechende Schneidvorrichtung ist auch mobil einsetzbar. Durch die Verwendung von hochsteifen und hochfesten Polymerfasern kann die einzulegende Einlage sehr dünn ausgeführt werden, daß die Biegesteifigkeit des Handlaufs in die Verbindungsstelle nur geringfügig erhöht wird. Dabei ist auch eine hohe Oberflächenqualität der Verbindungsstelle herstellbar. Eine günstige Ausbildung wird dadurch geschaffen, daß das verpreßte Flächenelement eine dünne textile Struktur aufweist.

Ferner wird vorgeschlagen, daß das Flächenelement zusätzlich in Querrichtung angeordnete Fasern aufweist.

In der Zeichnung ist eine Ausbildung eines zusammenzusetzenden Handlaufs schematisch dargestellt. Es zeigen:

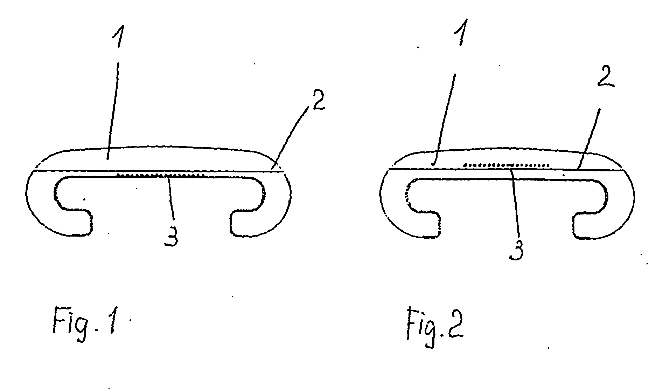

- Fig. 1: einen Profischnitt mit einer Schnittebene dicht oberhalb der Längsverstärkungselemente und
- Fig. 2: eine Darstellung wie Fig. 1 und einer Schnittebene dicht unterhalb der Längsverstärkungsebene.

Bei der Herstellung des horizontalen Schnitts werden die Enden eines Handlaufs 1 in eine Vorrichtung eingelegt und über eine Transportvorrichtung oder manuell einer Messereinrichtung entgegengeschoben, so daß ein Horizontalschnitt 2 möglichst dicht oberhalb oder unterhalb einer Längsverstärkung 3 bis zu einer gewissen Länge aufschneidet. Durch den Messerschnitt geht kein Material verloren.

Die horizontal eingeschnittenen Enden werden in eine Preßform, die der Außenkontur des Handlaufs 1 entspricht, eingelegt. In den Schnitt wird eine beide Enden überlappende textile Einlage gelegt, die relativ dünn ist. Diese weist in Längsrichtung ausreichend hochsteife und - feste Fasern auf, die sehr präzise in Längsrichtung orientiert sind. In der Querrichtung kann diese textile Struktur auch Fasern aufweisen, um an der Stoßstelle des Handlaufs 1 keinen lokalen Abfall der Profilsteifigkeit zu erhalten.

Anschließend wird die Preßform geschlossen. Durch eine gezielte Temperaturführung schmilzt die thermoplastische Matrix des Handlaufs 1 an der eingelegten Einlage auf, penetriert sie und bindet so die eingelegten Einlage mit an den Längsversteifungsträger 3 des Handlaufs 1 an. Nach dem Abkühlen kann die eingelegte Einlage die Zugspannungen von dem einen Handlaufende in das andere Handlaufende über Schubspannungen an den überlappenden Grenzflächen übertragen.

Die Vorrichtung zur Herstellung der Endlosverbindung ist einer Preßform ähnlich. An beiden Enden der Preßform ist diese an der Oberschale und an der Unterschale permanent gekühlt. Im Mittenbereich befinden sich eine Heizung und eine Kühlung. Der Kern kann in gleicher weise temperiert werden.

Die beiden Handlaufenden mit der eingelegten Einlage sind auf den Kern der Form geschoben. Mit diesem Kern können die beiden Handlaufenden auf dem Kopf, d.h. die spätere Sichtseite des Handlaufs liegt nach unten, in diese Form gelegt werden. Die Oberschale, die in Längsrichtung eine Öffnung für den Kern aufweist, wird auf die Unterschale positioniert und Unter- und Oberschale werden fest zusammengefügt.

In der definiert temperierten Form wird nun mittels definierter Kraft oder Weg der Kern nach unten, also in Richtung der Handlaufoberseite gedrückt. Da die Formhälften auf eine Temperatur eingestellt sind, bei der die Matrix des Handlaufs nicht erweicht, kann der biegesteife Kern die Geometrie des Handlaufs nicht beeinflussen.

Im Mittenbereich der Form, die der Erweichungstemperatur bzw. Schmelztemperatur der Matrix entspricht, schmilzt die Matrix in der Nähe des eingelegten Tapes auf und penetriert es. Nach ausreichender Penetration wird die Form abgekühlt, so daß eine adhäsive Verbindung der Handlaufmatrix mit der eingelegten Einlage eingegangen ist.

## Patentansprüche

1. Verfahren zur Endlosverbindung von Handläufen (1) für Fahrtreppen und Fahrsteige mit einem Griffstück aus Polymerwerkstoffund einer Zugkräfte aufnehmenden Verstärkungsschicht aus längs verlaufenden hochsteifen Polymerfasern als Matrix mit einer Schicht zur Formstabilisierung aus in Querrichtung angeordneten Textillagen und einer abschließenden Gleitschicht, wobei die Schichten zu einer textilen Struktur einstückig zusammengefaßt sind und mit dem Griffstück in einem Fertigungsgang verbunden sind, wobei die zusammenzufügenden Enden des Handlaufes (1) durch einen horizontalen Schnitt (2) als Messerschnitt im Nahbereich der eingebetteten verstärkungsschicht (3) zur Bildung von gegenüberliegenden Aufnahmen in Längsrichtung über ihre Breite auftrennbar ist und eine den Verbindungsbereich überlappende parallele Einlage in die gegenüberliegenden Aufnahmen als Flächenelement aus einem Material mit mindestens in Längsrichtung angeordneten hochsteifen und hochfesten Fasern, ähnlich der Verstärkungsschicht (3) des Handlaufes (1), einsetzbar ist und der Verbindungsbereich unter Erwärmung in einer die Enden aufnehmenden Preßform thermoplastisch derart verpreßbar ist, daß eine Penetration der Matrix in das Flächenelement erfolgt.

2. Verfahren nach Anspruch 1, **dadurch gekennzeichnet, daß** das verpreßbare Flächenelement eine dünne textile Struktur ist.

3. Verfahren nach Anspruch 1 oder 2, **dadurch gekennzeichnet, daß** das Flächenelement zusätzlich in Querrichtung angeordnete Fasern aufweist.

## Claims

1. Method for the endless connection of handrails (1) for escalators and travelators comprising a grip piece made of polymer material and a tensile-force-absorbing reinforcing layer of longitudinally extending highly rigid polymer fibres as a matrix with a dimensionally stabilizing layer of textile plies disposed in transverse direction and a final sliding layer, wherein the layers are integrally combined into a textile structure and connected to the grip piece in one manufacturing operation, wherein the ends of the handrail (1) that are to be joined together may be cut open over their width by a horizontal cut (2) in the form of a knife cut in the immediate vicinity of the embedded reinforcing layer (3) to form opposing receivers in longitudinal direction and a parallel insert, which overlaps the connecting region, is insertable into the opposing receivers as a two-dimensional element made of a material having highly rigid and high-performance fibres disposed at least in longitudinal direction, similar to the reinforcing layer (3) of the handrail (1), and the connecting region is thermoplastically mouldable under the action of heat in a compression mould, which receives the ends, in such a way that a penetration of the matrix into the two-dimensional element occurs.

2. Method according to claim 1, **characterized in that** the mouldable two-dimensional element is a thin textile structure.

3. Method according to claim 1 or 2, **characterized in that** the two-dimensional element additionally comprises fibres disposed in transverse direction.

## Revendications

1. Procédé pour le raccordement sans fin de mains-courantes (1) pour des escaliers roulants et des trottoirs roulants avec une pièce de prise en matériau polymère et une couche de renforcement en fibres polymères de rigidité élevée, qui absorbe les forces de traction, s'étendant dans la direction longitudinale, en tant que matrice, avec une couche de stabilisation de forme en nappes textiles, disposées dans le sens transversal, et une couche terminale de glissement, les couches étant assemblées en une pièce, qui forme une structure textile, et étant raccordées à la pièce de prise au cours d'une étape de fabrication, les extrémités assemblées de la main-courante (1) pouvant être séparées, sur leur largeur, par une coupe horizontale (2), en tant que coupe au couteau, dans la zone proche de la couche de renforcement noyée (3), pour former des réceptacles opposés, dans la direction longitudinale, et un insert parallèle, qui chevauche la zone de raccordement, pouvant être engagé dans les réceptacles opposés, en tant qu'élément plan, en matériau comprenant au moins des fibres de rigidité et de résistance élevées, analogue à la couche de renforcement (3) de la main courante (1), qui sont disposés dans la direction longitudinale, et la zone de raccordement pouvant être pressée, à l'état thermoplastique, par chauffage dans un moule recevant les extrémités, de sorte que la matrice pénètre dans l'élément plan.

2. Procédé selon la revendication 1, **caractérisé en ce que** l'élément plan, pouvant être pressé, est une structure textile, mince.

3. Procédé selon revendication 1 ou 2, **caractérisé en ce que** l'élément plan comprend, en supplément, des fibres disposées dans la direction transversale.
